# EUROPEAN PATENT SPECIFICATION

(11) **EP 2 894 756 B1**
(45) Date of publication and mention of the grant of the patent: **10.10.2018**
(21) Application number: 13834672.1
(22) Date of filing: 22.08.2013
(51) Int. Cl.: H02J 50/12, H02J 50/90, H02J 50/10, H02J 5/00, H02J 7/02

(54) **NON-CONTACT CHARGING SYSTEM**
KONTAKTLOSES LADESYSTEM
SYSTÈME DE CHARGE SANS CONTACT

(30) Priority: 06.09.2012 JP 2012196324
(43) Date of publication of application: 15.07.2015
(73) Proprietor: Maxell Holdings, Ltd., Kyoto 618-8525 (JP)
(72) Inventor: HINO, Yoshiharu, Ibaraki-shi, Osaka 567-8567 (JP); MIYAKE, Akira, Ibaraki-shi, Osaka 567-8567 (JP)
(74) Representative: Diehl & Partner GbR
(86) International application number: PCT/JP2013/072430
(87) International publication number: WO 2014/038388

(56) References cited:
- JP-A- 2001 148 724
- JP-A- 2005 278 273
- JP-A- 2008 271 690
- US-A1- 2008 211 455
- US-A1- 2010 066 305
- US-A1- 2011 169 446
- US-A1- 2011 208 269

## Description

### Technical Field

The present invention relates to a non-contact charging system that transmits electric power in a non-contact manner through electromagnetic induction to charge a secondary battery built in a power receiving side, and more particularly to a function of avoiding power consumption during the storage period of a small set device having a built-in secondary battery.

### Background Art

In recent years, a non-contact charging system that feeds power in a non-contact manner (wirelessly) has been increasingly used for small electrical devices such as cellular phones. With use of such a non-contact charging system for charging a secondary battery built in a small electrical device, cumbersome charging operation is widely improved. Also, for a small set device, such as a hearing aid, operating with a button lithium ion battery, which often has to be waterproof considering its use environment, non-contact charging of the battery is essential from the standpoint of the form.

A non-contact charging system is comprised of a power transmission module incorporated in a charger, for example, and a power receiving module incorporated in a set device. Electric power is transmitted from the power transmission module to the power receiving module through electromagnetic induction between a power transmission coil of the power transmission module and a power receiving coil of the power receiving module. In the power receiving module, AC power received by the power receiving coil is converted to DC power, and voltage-converted to a charging voltage, to perform charging of a secondary battery.

In a small set device as that described above, which uses a button secondary battery small in capacity, it is desirable to reduce wasteful consumption of stored electric energy as much as possible. In particular, it is very important to reduce own power consumption during the time period when the set device having a built-in secondary battery is in the storage state before shipment after having been manufactured in a factory. By this, the allowable storage period of the secondary battery, as well as the allowable storage period of the set device having the secondary battery built therein, will be increased.

To achieve the above, it is natural to stop normal power supply from the secondary battery to the set device during the storage of the set device. For example, Patent Document 1 discloses an example configuration for reducing own power consumption in a battery pack during storage.

More specifically, the battery pack has a built-in semiconductor circuit including a computation circuit that computes the remaining capacity of a built-in secondary battery, a memory circuit that stores information on the battery pack, etc. This semiconductor circuit, operating using the secondary battery as the power source, consumes wasteful power even during the storage of the battery pack. Therefore, Patent Document 1 describes a configuration where power supply to the above-described semiconductor circuit is performed via a set device to which the secondary battery pack is to be connected. With this, since the battery pack is not connected to the set device during storage, power consumption can be reduced.

### Prior Art Documents

### Patent Document

[Patent Document 1] JP 2002-324588A

US 2011/0208269 A1 discloses a battery protection apparatus being present by the ability to isolate the battery from both a load via load switch and from a charge controller via a main switch.

### Disclosure of Invention

### Problem to be Solved by the Invention

In the case of a small set device like a hearing aid, however, the second battery is often built in the set device in an unexchangeable state. In such a case, a method such as that in Patent Document 1 cannot be employed.

Also, a protection circuit is normally provided in the secondary battery pack, and configured to stop discharging to the pack output in case of the occurrence of an overdischarge state. Even in this case, however, power supply for the operation of the protection circuit is maintained as far as within the use voltage range. Therefore, even when the overdischarge protection functions, power consumption inside the protection circuit continues.

In the long term, however, the power consumption of the protection circuit becomes a nonnegligible amount. Therefore, in the case of a small set device, in particular, unless a means of reducing the power consumption of the protection circuit itself is provided, the allowable storage period will be limited by the own power consumption.

In view of the above, an objective of the present invention is providing a non-contact charging system where power supply to all power supply portions including a protection circuit is stopped in the initial state of a power receiving module having a built-in secondary battery, and normal-use power supply is permitted in response to an occurrence of the state where a set device including the power receiving module has been put to use.

### Means for Solving Problem

The non-contact charging system according to the present invention includes: a power transmission module having a power transmission coil for transmitting high-frequency power; and a power receiving module having a power receiving coil that receives the high-frequency power through electromagnetic induction and a built-in secondary battery charged with DC power obtained by rectifying the received power, the power receiving module including a protection circuit that prevents overdischarge of the secondary battery.

To solve the above-described problem, the power receiving module includes a switching control section that performs switching between a storage mode where a current path from the secondary battery to all power supply portions including the protection circuit is shut off and a use mode where power supply from the secondary battery is permitted, and a loading responsive section that outputs a loading responsive signal when the power receiving module is loaded in a predetermined power receiving position with respect to the power transmission module, and the switching control section is set to maintain the storage mode in an initial state, and configured to switch the mode to the use mode and maintain the mode in response to output of the loading responsive signal.

### Effects of the Invention

With the above configuration, in the initial state, the storage mode where a current path from the secondary battery to all power supply portions including the protection circuit is shut off is held. Therefore, the own current consumption is reduced permitting long-term storage. Upon loading of the power receiving module onto the power transmission module, the mode is changed to the use mode permitting power supply. Thus, switching of the operation mode according to the state of loading of the power receiving module is performed without involving increase and complication of the structure, permitting reduction in the power consumption caused by the protection circuit while avoiding cumbersomeness of the operation.

### Brief Description of Drawings

[FIG. 1] FIG. 1 is a block diagram showing a non-contact charging system of Embodiment 1 according to the present invention.
[FIG. 2A] FIG. 2A is a waveform chart for explaining the operation of a non-contact charging system of Embodiment 2.
[FIG. 2B] FIG. 2B is another waveform chart for explaining the operation of the non-contact charging system of Embodiment 2.
[FIG. 3] FIG. 3 is a block diagram showing a non-contact charging system of Embodiment 3.
[FIG. 4A] FIG. 4A is a waveform chart for explaining a first example of operation of the non-contact charging system of Embodiment 3.
[FIG. 4B] FIG. 4B is a waveform chart for explaining a second example of operation of the non-contact charging system of Embodiment 3.
[FIG. 4C] FIG. 4C is a waveform chart for explaining a third example of operation of the non-contact charging system of Embodiment 3.
[FIG. 4D] FIG. 4D is a waveform chart for explaining the third example of operation of the non-contact charging system of Embodiment 3.
[FIG. 5] FIG. 5 is a block diagram showing a non-contact charging system of Embodiment 4.
[FIG. 6] FIG. 6 is a waveform chart for explaining the operation of the non-contact charging system of Embodiment 4.

### Description of the Invention

The non-contact charging system according to the present invention can take the following forms based on the above-described configuration.

That is, the loading responsive section may be configured to present an output responsive to the presence or absence of a power receiving carrier of the high-frequency power in the output of the power receiving coil, and output the loading responsive signal when the power receiving carrier is present.

The non-contact charging system may further include an operation limiting section that limits the operation of the switching control section according to a carrier time width that is a time width over which the power receiving carrier of the high-frequency power is present in the output of the power receiving coil, wherein the operation limiting section may perform control to permit switching to the use mode by the switching control section when the carrier time width exceeds a fixed length.

The power transmission module may include a transmitter section that transmits data including a cancel command, the power receiving module may include a receiver section that receives transmitted data from the transmitter section of the power transmission module, and the switching control section may perform control of switching to the use mode when the carrier time width exceeds a fixed length or when the receiver section receives the cancel command.

The power transmission module may include a transmitter section that transmits data including a cancel command, and the power receiving module may include a receiver section that receives transmitted data from the transmitter section of the power transmission module and an operation limiting section that performs control to permit switching to the use mode by the switching control section when the cancel command is received.

The power receiving module may include a proximity switch, the power transmission module may include a switching action section placed so as to switch the proximity switch when the power receiving module is put in the power receiving position, and the loading responsive section may output the loading responsive signal in response to switching of the proximity switch by the switching action section.

In the above case, the power transmission module may include a transmitter section that transmits data including a cancel command, and the power receiving module may include a receiver section that receives transmitted data from the transmitter section of the power transmission module and an operation limiting section that performs control to permit switching to the use mode by the switching control section when the cancel command is received.

The switching control section may be configured to switch the mode to the storage mode and maintain the mode when the receiver section receives a storage mode setting command.

Embodiments of the present invention will be described hereinafter with reference to the accompanying drawings.

### <Embodiment 1>

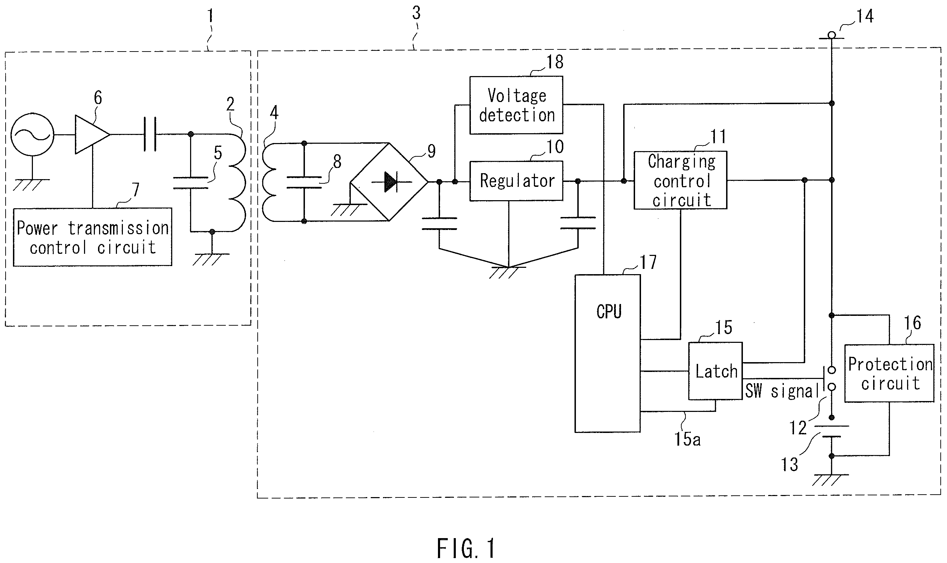

A non-contact charging system of Embodiment 1 will be described with reference to the block diagram shown in FIG. 1. This system is configured to transmit electric power between a power transmission coil 2 of a power transmission module 1 and a power receiving coil 4 of a power receiving module 3 through electromagnetic induction. The power transmission module 1 is incorporated in a charger, and the power receiving module 3 is incorporated in a set device such as a cellular phone and a hearing assist.

High-frequency power is supplied from a coil driver 6 to a resonant circuit constituted by the power transmission coil 2 and a resonant capacitor 5, to perform power transmission from the power transmission coil 2. The operation of the coil driver 6 is controlled by a power transmission control circuit 7. In the power receiving module 3, the high-frequency power is received by a resonant circuit constituted by a parallel circuit of the power receiving coil 4 and a resonant capacitor 8. An AC voltage at both ends of the resonant capacitor 8 is supplied to a rectifying circuit 9 to be converted to a DC voltage.

The output power of the rectifying circuit 9 is regulated to a fixed voltage by a regulator 10, and then supplied to a built-in secondary battery 13 via a feed switch 12 by a charging control circuit 11. Discharged power from the secondary battery 13 is supplied to a power source section 14 of the set device incorporating the power receiving module 3 via the feed switch 12. The feed switch 12 is held in the ON or OFF state according to a SW signal output from a latch circuit 15.

A protection circuit 16 is provided for preventing overdischarge of the secondary battery 13. Although illustration is omitted, the module is configured so that a discharge route from the secondary battery 13 is shut off with the operation of the protection circuit 16 as conventionally known. The protection circuit 16 is connected to receive power supply from the secondary battery 13 via the feed switch 12. Having this connection, when the feed switch 12 is in the OFF state, not only the power supply from the secondary battery 13 to the power source section 14 of the set device, but also the current route to all power supply portions including the protection circuit 16 are shut off.

In the initial state, e.g., during the time period when the set device incorporating the power receiving module 3 is in the storage state before shipment, etc., the SW signal of the latch circuit 15 is held in the OFF state, and thus the feed switch 12 is OFF. This state where the route of power supply from the secondary battery 13 is shut off due to the function of the feed switch 12 and the latch circuit 15 is referred to as the "storage mode" in this embodiment. On the other hand, the state where the feed switch 12 is held in the ON state by the latch circuit 15 permitting power supply is referred to as the "use mode." The feed switch 12 and the latch circuit 15 function as the switching control section that performs switching between the storage mode and the use mode of the power receiving module 3.

Switching to the use mode occurs with the output of a charging voltage from the charging control circuit 11 to the secondary battery 13. More specifically, the latch circuit 15 is switched to ON with the charging voltage from the charging control circuit 11. The charging voltage from the charging control circuit 11 in this case functions as a signal for switching the storage mode of the power receiving module 3 to the use mode.

The charging voltage from the charging control circuit 11 is generated with the presence of a carrier of high-frequency power in the power receiving coil 4. This indicates that the charging control circuit 11 supplies a signal responsive to the presence or absence of a carrier of high-frequency power in the power receiving coil 4 to the latch circuit 15. A carrier in the power receiving coil 4 occurs with loading of the power receiving module 3 in a predetermined power receiving position with respect to the power transmission module 1 (on the premise that electric power is being transmitted from the power transmission coil 2). Therefore, the charging control circuit 11 functions as the loading responsive section that operates according to the state of loading of the power receiving module 3 in the power receiving position and outputs a loading responsive signal when the power receiving module 3 is loaded in the power receiving position. As described above, the switching control section constituted by the feed switch 12 and the latch circuit 15 is configured to be switched to the use mode in response to the output of the loading responsive signal.

A CPU 17 connected to a set terminal of the latch circuit 15 has a function for setting the state of the feed switch 12 and the latch circuit 15 to the storage mode where the route of power supply from the secondary battery 13 is shut off. More specifically, in a pre-shipment inspection of the set device, the SW signal of the latch circuit 15 is controlled to the ON state to turn ON the feed switch 12, i.e., to set the mode to the use mode. Thereafter, for long-term storage, the SW signal of the latch circuit 15 is switched to the OFF state by an operation via the CPU 17 to set the mode to the storage mode. Also, for another purpose, the feed switch 12 can be made to return to the ON state as required by an operation via the CPU 17. Also, a monitor signal line 15a is placed between the CPU 17 and the latch circuit 15. The monitor signal line 15a is provided for feedback to the CPU 17 to check the state of the latch circuit 15. The CPU 17 detects the level of the monitor signal to previously check the current mode, and executes setting/cancelling of the storage mode as required.

A voltage detection circuit 18 is also connected to the output side of the rectifying circuit 9. The voltage detection circuit 18 detects the output voltage of the rectifying circuit 9 and supplies the detected result to the CPU 17. The CPU 17 determines whether or not the carrier in the power receiving coil 4 is in an appropriate state based on the output of the voltage detection circuit 18, and performs control of preventing a malfunction of the latch circuit 15 based on the determination.

According to the non-contact charging system having the above-described configuration, the SW signal of the latch circuit 15 is held in the OFF state before use of the set device by the user. Therefore, the storage mode where both the power supply from the secondary battery 13 to the power source section 14 of the set device and the power supply therefrom to the protection circuit 16 are shut off by the feed switch 12 is maintained. Having this configuration, even when the set device is stored for a long time, consumption of power by the protection circuit 16 can be prevented, ensuring prevention of the power of the secondary battery 13 from decreasing to its guaranteed value or less before the expiration of the guarantee period.

Meanwhile, when the user loads the set device on the charger incorporating the power transmission module 1 to start use of the set device, the power receiving coil 4 receives the carrier. With this, the SW signal of the latch circuit 15 is turned to and held in the ON state, turning ON the feed switch 12 and changing the mode to the use mode permitting power supply to the power source section 14 and the protection circuit 16.

As described above, according to this embodiment, switching of the operation mode responsive to the state of loading of the power receiving module can be made without involving increase and complication of the structure, which is difficult to achieve in the case of a small set device such as a hearing aid. It is therefore possible to reduce power consumption caused by the protection circuit 16 while avoiding cumbersomeness of the operation. This effect of the invention is especially advantageous for a device in which the secondary battery is built in an unchangeable state.

### <Embodiment 2>

The configuration of a non-contact charging system of Embodiment 2 is basically similar to that of Embodiment 1 shown in FIG. 1. The difference from Embodiment 1 is that the CPU 17 has a function as the operation limiting section that limits the switching of the SW signal of the latch circuit 15 to the ON state. The operation as the operation limiting section is performed according to the carrier time width that is the time width over which the power receiving carrier of high-frequency power is present in the output of the power receiving coil 4.

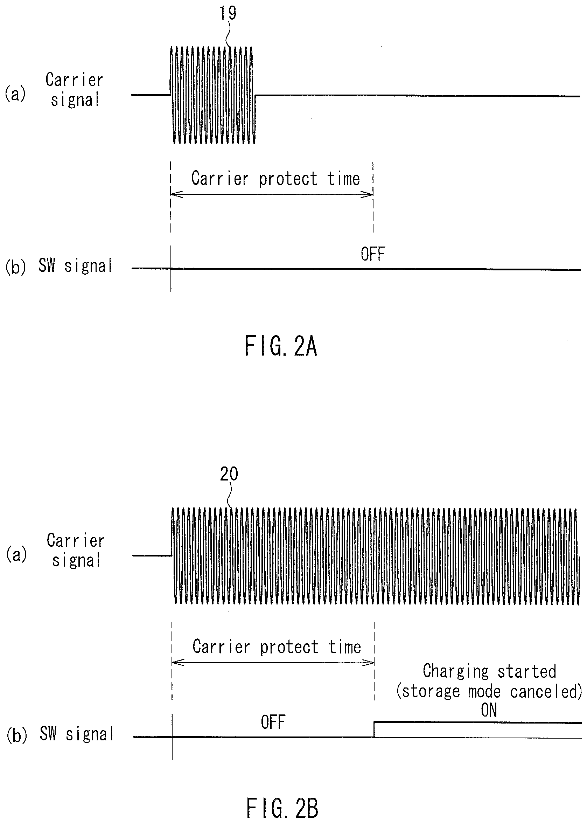

The function of the operation limiting section will be described with reference to the waveform charts shown in FIGS. 2A and 2B. In FIGS. 2A and 2B, (a) shows a waveform of the carrier signal of high-frequency power in the power receiving coil 4, and (b) shows a waveform of the SW signal output by the latch circuit 15.

The time period when the carrier is present in the carrier signal (a) in FIGS. 2A and 2B is shown by carrier waveforms 19 and 20. This time period corresponds to the time period when the power receiving module 3 is loaded in the power receiving position and the charging voltage from the charging control circuit 11 is being supplied to the secondary battery 13. This is therefore the time period when the loading responsive signal is being supplied to the latch circuit 15. In Embodiment 1, this time period corresponds with the ON period of the SW signal (b).

However, since it is assumed that an inappropriate carrier or noise may be received due to a malfunction in another system, it is desirable to control the operation so as to avoid the feed switch 12 from being turned ON in such a case. In this embodiment, the operation limiting section of the CPU 17 is configured to determine, as a malfunction, a case where the carrier time width falls short of a carrier protect time shown in FIGS. 2A and 2B.

The carrier waveform 19 of the carrier signal (a) in FIG. 2A, the time width of which falls short of the carrier protect time, is determined as having occurred due to a malfunction. Therefore, the operation limiting section limits the operation of the latch circuit 15 so as not to switch the SW signal (b) to the ON state although the charging voltage from the charging control circuit 11 is being supplied to the secondary battery 13. Thus, the SW signal (b) is held in the OFF state.

On the other hand, the time width of the carrier waveform 20 of the carrier signal (a) in FIG. 2B exceeds the carrier protect time. Therefore, at the time when the time width of the carrier waveform 20 has exceeded the carrier protect time, the limitation of the operation of the latch circuit 15 by the operation liming section is canceled. At this time, since the charging voltage from the charging control circuit 11 is being supplied to the secondary battery 13, the SW signal (b) is switched to the ON state, canceling the storage mode to shift to the use mode.

### <Embodiment 3>

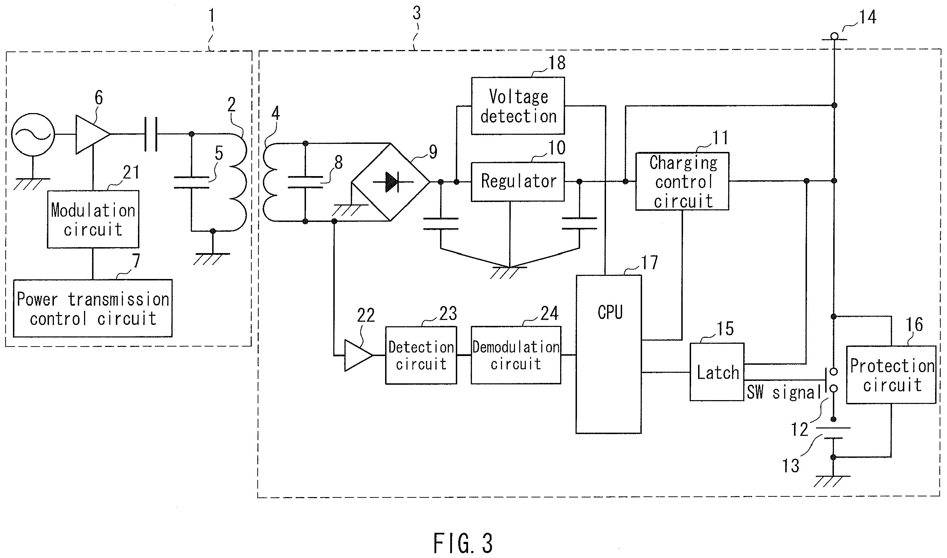

A non-contact charging system of Embodiment 3 will be described with reference to the block diagram shown in FIG. 3. The basic configuration of this system is similar to that of Embodiment 1, where like components are denoted by the same reference characters, and repetition of description is omitted.

In this embodiment, the power transmission module 1 includes a transmitter section that transmits data including a cancel command, and the power receiving module 3 includes a receiver section that receives the transmitted data from the transmitter section of the power transmission module 1. In FIG. 3, in the power transmission module 1, a modulation circuit 21 constitutes the transmitter section, which modulates the carrier of high-frequency power output by the coil driver 6 and transmits the cancel command or a storage mode setting command. In the power receiving module 3, an amplifier 22, a detection circuit 23, and a demodulation circuit 24 constitute the receiver section. The received data is supplied to the CPU 17.

The CPU 17 of the power receiving module 3 has a function as the operation limiting section that permits switching of the SW signal of the latch circuit 15 to the ON state only when the cancel command is received.

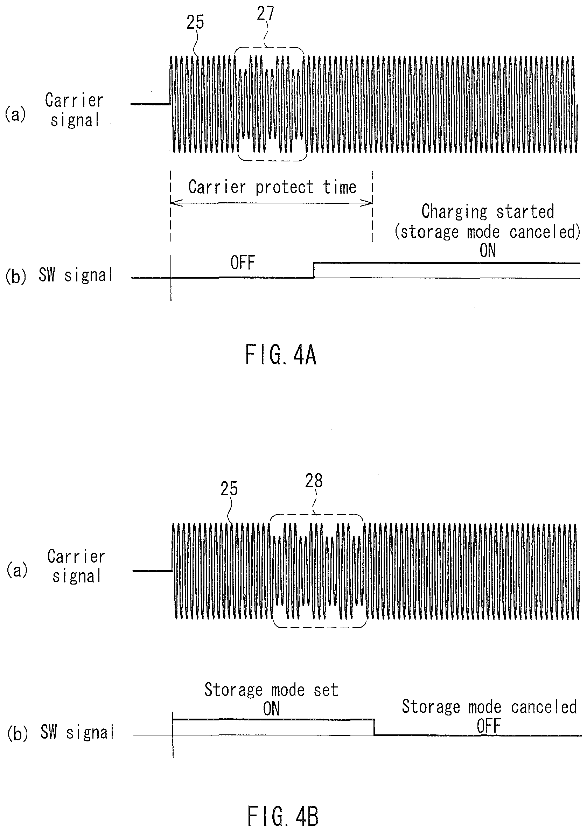

The function of the operation limiting section will be described with reference to the waveform charts shown FIGS. 4A to 4D. In FIGS. 4A to 4D, (a) shows a waveform of the carrier signal of high-frequency power in the power receiving coil 4, and (b) shows a waveform of the SW signal output by the latch circuit 15.

The time period when the carrier is present in the carrier signal (a) is shown by carrier waveforms 25 and 26. This time period corresponds to the time period when the power receiving module 3 is loaded in the power receiving position and the charging voltage from the charging control circuit 11 is being supplied to the secondary battery 13. This is therefore the time period when the loading responsive signal is being supplied to the latch circuit 15. In Embodiment 1, this time period corresponds with the ON period of the SW signal (b). By contrast, in this embodiment, the ON/OFF of the SW signal (b) is switched by further using a cancel command 27 or a storage mode setting command 28 in addition to the above.

FIG. 4A shows an operation of a first example of the non-contact charging system of this embodiment. This example shows a configuration for dealing with a case where the carrier protect time needs to be canceled forcefully for the purpose of shortening the product inspection time in the manufacturing process, for example. In this case, the cancel command 27 included in the carrier signal (a) is used together with the carrier protect time. With this use, by transmitting the cancel command 27 from the power transmission module 1 before the expiration of the protect time, the SW signal (b) can be switched to the ON state, to cancel the storage mode.

FIG. 4B shows an operation of a second example of the non-contact charging system of this embodiment. This example shows a configuration for dealing with a case where the storage mode needs to be set again after termination of the operation check inspection in the manufacturing process at the time of factory shipment, etc. In this case, the storage mode setting command 28 is transmitted from the power transmission module 1 when the SW signal (b) is in the ON state. The storage mode setting command 28 is demodulated in the receiver circuit of the power receiving module 3, to allow the CPU 17 to switch the SW signal (b) of the latch circuit 15 to the OFF state, setting the mode to the storage mode.

With the above configuration, setting of the storage mode can be made by a method undisclosed to the user. Setting of the storage mode can be made, not only by this configuration, but also by another method undisclosed to the user. Also, for the configuration of canceling the storage mode with the carrier signal (like that in Embodiment 2), shifting to the storage mode can be made by stopping the carrier within the carrier protect time after switching the SW signal to the OFF state.

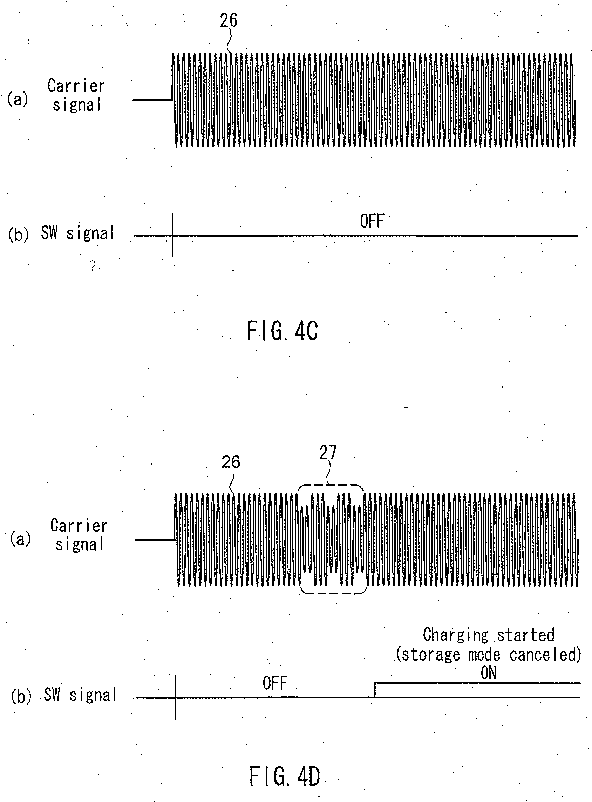

FIGS. 4C and 4D show an operation of a third example of the non-contact charging system of this embodiment. This example shows a configuration for dealing with a case where an inappropriate carrier or noise is received due to a malfunction of another system. In this configuration, whether or not switching from the storage mode to the use mode is allowed is determined using, not only the carrier waveform, but also the cancel command 27 transmitted from the power transmission module 1. That is, in place of the determination on whether or not the carrier time width exceeds the carrier protect time in Embodiment 2, determination on a malfunction is performed using reception of the cancel command. Therefore, the feed switch 12 will not be turned ON with only a sufficiently long carrier time width.

The carrier signal (a) in FIG. 4C includes only the carrier waveform 26 with no cancel command received, and thus is determined to have occurred due to a malfunction. Therefore, the operation limiting section limits the operation of the latch circuit 15 so as not to switch the SW signal (b) to the ON state although the charging voltage from the charging control circuit 11 is being supplied to the secondary battery 13. Accordingly, the SW signal (b) is held in the OFF state.

By contrast, the carrier waveform 26 of the carrier signal (a) in FIG. 4D includes the cancel command 27. Therefore, at the time of reception of the cancel command 27, the limitation of the operation of the latch circuit 15 by the operation limiting section is canceled. At this time, since the charging voltage from the charging control circuit 11 is being supplied to the secondary battery 13, the SW signal (b) is switched to the ON state, to cancel the storage mode and shift to the use mode. It is also possible to provide a configuration where the SW signal (b) is switched to the OFF state using the storage mode setting command 28 shown in FIG. 4B, to shift to the storage mode.

### <Embodiment 4>

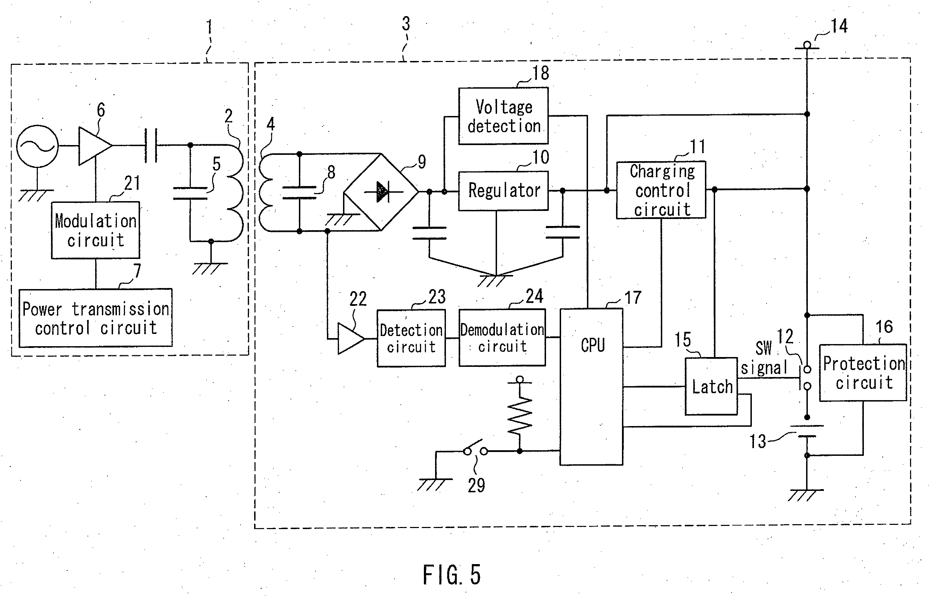

A non-contact charging system of Embodiment 4 will be described with reference to the block diagram shown in FIG. 5. The basic configuration of this system is similar to that shown in FIG. 3, where like components are denoted by the same reference characters, and repetition of description is omitted.

In this embodiment, a proximity switch 29 is provided in addition to the configuration shown in FIG. 3. The proximity switch 29 functions as the loading responsive section that outputs the loading responsive signal when the power receiving module 3 is loaded in a predetermined power receiving position with respect to the power transmission module 1.

More specifically, the proximity switch 29 is turned ON or OFF according to whether or not the power receiving module 3 is loaded in a predetermined power receiving position with respect to the power transmission module 1. It is herein assumed that the ON state corresponds to the loaded state in the power receiving position. A voltage corresponding to the ON/OFF of the proximity switch 29 is supplied to the CPU 17. The CPU 17 generates the loading responsive signal under the correspondence of the ON state of the proximity switch 29 to the loaded state of the power receiving module 3 in the power receiving position, and supplies the signal to the latch circuit 15. With this, the output of the latch circuit 15 is switched to the ON state, to turn ON the feed switch 12.

The ON/OFF of the proximity switch 29 is switched according to the presence or absence of loading of the power receiving module 3 on the power transmission module 1 by a switching action section provided in the power transmission module 1. As the proximity switch 29, a reed switch controlled in response to magnetic force can be used, for example. In this case, as the switching action section, a magnet is placed in the power transmission module 1 next to the power receiving position of the power receiving module 3. Alternatively, a mechanical reed switch may be used as the proximity switch 29. In this case, as the switching action section, a pressing member for switching the ON/OFF of the mechanical reed switch may be placed in the power transmission module 1. Otherwise, the proximity switch 29 may be configured of a combination of a light source and a photosensor.

Moreover, in this embodiment, as in the configuration shown in FIG. 3, using the cancel command received from the power transmission module 1, the CPU 17 of the power receiving module 3 is configured to have a function as the operation limiting section that permits switching of the SW signal of the latch circuit 15 to the ON state only when the cancel command is received. Therefore, whether or not switching from the storage mode to the use mode is allowed is determined with, not only the loading responsive signal based on the state of the proximity switch 29, but also the cancel command. In other words, improper control based on a malfunction of the proximity switch 29 is avoided by additionally using the cancel command based on the function of the operation limiting section of the CPU 17.

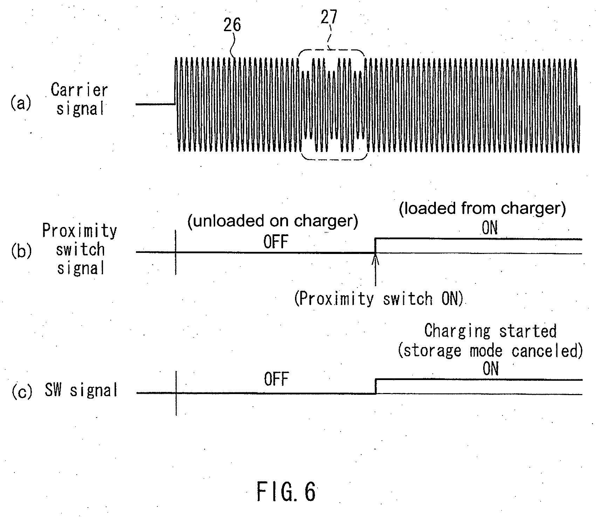

The operation of the non-contact charging system having the above-described configuration will be described with reference to the waveform chart shown in FIG. 6. In FIG. 6, (a) shows a waveform of the carrier signal of high-frequency power in the power-receiving coil 4, (b) shows an output waveform of the proximity switch 29, and (c) shows a waveform of the SW signal output by the latch circuit 15.

The time period when the carrier is present in the carrier signal (a) is shown by the carrier waveform 26. This time period corresponds to the time period when the power receiving module 3 is loaded in the power receiving position and the charging voltage from the charging control circuit 11 is being supplied to the secondary battery 13. However, the presence of the carrier waveform 26 does not necessarily correspond to the time period when the loading responsive signal is being supplied to the latch circuit 15.

In this embodiment, supplying the loading responsive signal to the latch circuit 15 in response to the ON state of the output waveform (b) of the proximity switch 29 constitutes the basic condition under which the SW signal (c) becomes ON. In other words, the SW signal (c) may be configured to become ON with only the loading responsive signal based on the state of the proximity switch 29, to perform switching from the storage mode to the use mode.

In the above case, also, it is assumed that the output waveform (b) of the proximity switch 29 may become ON due to a malfunction of some kind. In this case, it is desirable to operate to avoid the feed switch 12 from being turned ON to switch the mode to the use mode. In this embodiment, therefore, whether or not switching from the storage mode to the use mode is allowed is determined with, not only the carrier waveform 26, but also the cancel command transmitted from the power transmission module 1. In other words, the operation limiting section of the CPU 17 is configured so that the feed switch 12 will not be turned ON with only the output waveform (b) of the proximity switch 29, and a malfunction or not is determined with additional use of reception of the cancel command.

The carrier waveform 26 of the carrier signal (a) in FIG. 6 includes the cancel command 27. Therefore, at the time of reception of the cancel command 27, the limitation of the operation of the latch circuit 15 by the operation limiting section is canceled. At this time, since the output waveform (b) of the proximity switch 29 is ON indicating that the loading responsive signal is being supplied from the CPU 17 to the latch circuit 15, the SW signal (c) is switched to the ON state, to cancel the storage mode and shift to the use mode.

### Industrial Applicability

The non-contact charging system according to the present invention can minimize power consumption during long-term storage of a set device incorporating a secondary battery, and thus is useful for small electrical devices such as cellular phones and hearing aids.

### Description of Reference Numerals

1 Power transmission module
2 Power transmission coil
3 Power receiving module
4 Power receiving coil
5, 8 Resonant capacitor
6 Coil driver
7 Power transmission control circuit
9 Rectifying circuit
10 Regulator
11 Charging control circuit
12 Feed switch
13 Secondary battery
14 Power source section
15 Latch circuit
15a Monitor signal line
16 Protection circuit
17 CPU
18 Voltage detection circuit
19, 20, 25, 26 Carrier Waveform
21 Modulation circuit
22 Amplifier
23 Detection circuit
24 Demodulation circuit
27 Cancel command
28 Storage mode setting command
29 Proximity switch

## Claims

1. A non-contact charging system (1, 3) comprising:
a power transmission module (i) having a power transmission coil (2) for transmitting high-frequency power; and
a power receiving module (3) having a power receiving coil (4) adapted to receive the high-frequency power through electromagnetic induction and a built-in secondary battery (13) charged with DC power obtained by rectifying the received power, the power receiving module (3) including a protection circuit (16) adapted to prevent over-discharge of the secondary battery (13),
wherein the power receiving module (3) includes
a switching control section (12) adapted to perform switching between a storage mode where a current path from the secondary battery (13) to all power supply portions including the protection circuit (16) is shut off and a use mode where power supply from the secondary battery (13) is permitted,
a loading responsive section that is adapted to output a loading responsive signal when the power receiving module (3) is loaded in a predetermined power receiving position with respect to the power transmission module (1), and
the switching control section (12) is set to maintain the storage mode in an initial state, and configured to switch the mode to the use mode and maintain the mode in response to output of the loading responsive signal, **characterized by** comprising an operation limiting section that limits the operation of the switching control section (12) according to a carrier time width that is a time width over which the power receiving carrier of the high-frequency power is present in the output of the power receiving coil (4), wherein the operation limiting section performs control to permit switching to the use mode by the switching control section when the carrier time width exceeds a fixed length.

2. The non-contact charging system of claim 1, wherein the loading responsive section is configured to present an output responsive to the presence or absence of a power receiving carrier of the high-frequency power in an output of the power receiving coil and outputs the loading responsive signal when the power receiving carrier is present.

3. The non-contact charging system of claim 1 or 2, wherein the power transmission module includes a transmitter section that transmits data including a cancel command,
the power receiving module includes a receiver section that receives transmitted data from the transmitter section of the power transmission module, and
the switching control section performs control of switching to the use mode when the carrier time width exceeds a fixed length or when the receiver section receives the cancel command.

4. The non-contact charging system of claim 2, wherein the power transmission module includes a transmitter section that transmits data including a cancel command, and
the power receiving module includes a receiver section that receives transmitted data from the transmitter section of the power transmission module and an operation limiting section that performs control to permit switching to the use mode by the switching control section when the cancel command is received.

5. The non-contact charging system of claim 1, wherein the power receiving module includes a proximity switch,
the power transmission module includes a switching action section placed so as to switch the proximity switch when the power receiving module is put in the power receiving position, and
the loading responsive section outputs the loading responsive signal in response to switching of the proximity switch by the switching action section.

6. The non-contact charging system of claim 5, wherein the power transmission module includes a transmitter section that transmits data including a cancel command, and
the power receiving module includes a receiver section that receives transmitted data from the transmitter section of the power transmission module and an operation limiting section that performs control to permit switching to the use mode by the switching control section when the cancel command is received.

7. The non-contact charging system of any one of claims 3, 4, and 6, wherein the switching control section is configured to switch the mode to the storage mode and maintain the mode when the receiver section receives a storage mode setting command.

## Patentansprüche

1. Kontaktloses Ladesystem (1, 3) mit:
einem Leistungsübertragungs-Modul (1) mit einer Leistungsübertragungs-Spule (2) zum Übertragen von Hochfrequenz-Leistung; und
einem Leistungsempfangs-Modul (3) mit einer Leistungsempfangs-Spule (4), die dazu ausgebildet ist, die Hochfrequenz-Leistung vermittels elektromagnetischer Induktion zu empfangen, und einem eingebauten Akkumulator (13), der mit durch Gleichrichten der empfangenen Leistung erzeugtem Gleichstrom erhalten wird, wobei das Leistungsempfangs-Modul (3) eine Schutzschaltung (16) beinhaltet, die dazu ausgebildet ist, eine Über-Ladung des Akkumulators (13) zu verhindern,
wobei das Leistungsempfangs-Modul (3) beinhaltet:
einen Schaltsteuerungsabschnitt (12), der dazu ausgebildet ist, Umschalten zwischen einem Speichermodus, indem ein Strompfad von dem Akkumulator (13) zu allen Leistungszufuhr-Bereichen einschließlich der Schutzschaltung (16) abgeschaltet ist, und einem Verbrauchsmodus, in dem die Leistungszufuhr von dem Akkumulator (13) zugelassen ist, durchzuführen,
einen Lade-Anzeige-Abschnitt, der dazu ausgebildet ist, ein Lade-Anzeige-Signal auszugeben, wenn das Leistungsempfangs-Modul (3) in einer vorbestimmten Leistungsempfangs-Position in Bezug auf das Leistungsübertragungs-Modul (1) geladen wird, und
der Schaltsteuerungsabschnitt (12) so eingestellt ist, dass der Speichermodus in einem anfänglichen Zustand beibehalten wird, und dazu ausgebildet ist, den Modus zum Verbrauchsmodus umzuschalten, und den Modus in Abhängigkeit einer Ausgabe des Lade-Anzeige-Signal beizubehalten, **gekennzeichnet durch** einen Betriebsbegrenzungs-Abschnitt, der den Betrieb des Schaltsteuerungsabschnitt (12) gemäß einer Trägerzeitdauer beschränkt, welches eine Zeitdauer ist, über welche der Leistungsempfangs-Träger der Hochfrequenzleistung in der Ausgabe der Leistungsempfangs-Spule (4) präsent ist, wobei der Betriebsbegrenzungs-Abschnitt eine Steuerung derart ausführt, dass Umschalten zum Verbrauchsmodus **durch** den Schaltsteuerungsabschnitt erlaubt ist, wenn die Trägerzeitdauer eine gegebene Länge überschreitet.

2. Kontaktloses Ladesystem nach Anspruch 1, wobei der Lade-Anzeige-Abschnitt dazu ausgebildet ist, in Abhängigkeit vom Vorhandensein oder der Abwesenheit eines Leistungsempfangs-Trägers der Hochfrequenzleistung in einer Ausgabe der Leistungsempfangs-Spule eine Ausgabe anzubieten, und das Lade-Anzeige-Signal auszugeben, wenn der Leistungsempfangs-Träger vorhanden ist.

3. Kontaktloses Ladesystem nach Anspruch 1 oder 2, wobei
das Leistungsübertragungs-Modul einen Senderabschnitt beinhaltet, der Daten einschließlich eines Abbruchsignals sendet,
das Leistungsempfangs-Modul einen Empfängerabschnitt beinhaltet, der von dem Senderabschnitt des Leistungsübertragungs-Moduls gesendete Daten empfängt, und
der Schaltsteuerungsabschnitt eine Steuerung des Umschaltens in den Verbrauchsmodus durchführt, wenn die Trägerzeitdauer eine gegebene Länge überschreitet oder wenn der Empfänger den Abbruchbefehl empfängt.

4. Kontaktloses Ladesystem nach Anspruch 2, wobei
das Leistungsübertragungs-Modul einen Senderabschnitt beinhaltet, und
das Leistungsempfangs-Modul einen Empfängerabschnitt beinhaltet, der von dem Senderabschnitt des Leistungsübertragungs-Moduls gesendete Daten empfängt, und einen Betriebsbegrenzungs-Abschnitt beinhaltet, der eine Steuerung derart ausführt, dass das Umschalten in den Verbrauchs-Modus durch den Schaltsteuerungsabschnitt erlaubt ist, wenn der Abbruchbefehl empfangen wird.

5. Kontaktloses Ladesystem nach Anspruch 1, wobei
das Leistungsempfangs-Modul einen Annäherungsschalter beinhaltet,
das Leistungsübertragungs-Modul einen Schaltvorgangsabschnitt beinhaltet, der so angeordnet ist, dass er den Annäherungsschalter schaltet, wenn das Leistungsempfangs-Modul in der Leistungsempfangs-Position angeordnet wird, und
der Lade-Anzeige-Abschnitt das Lade-Anzeige-Signal in Abhängigkeit vom Schalten des Annäherungsschalters durch den Schaltvorgangsabschnitt ausgibt.

6. Kontaktloses Ladesystem nach Anspruch 5, wobei
das Leistungsübertragungs-Modul einen Senderabschnitt beinhaltet, der Daten einschließlich eines Abbruchbefehls sendet, und
das Leistungsempfangs-Modul einen Empfängerabschnitt beinhaltet, der von dem Senderabschnitt des Leistungsübertragungs-Moduls gesendete Daten empfängt, und einen Betriebsbegrenzungs-Abschnitt beinhaltet, der eine Steuerung derart ausführt, dass das Umschalten in den Verbrauchs-Modus durch den Schaltsteuerungsabschnitt erlaubt ist, wenn der Abbruchbefehl empfangen wird.

7. Kontaktloses Ladesystem nach einem der Ansprüche 3, 4 und 6, wobei der Schalt-Kontrollabschnitt dazu ausgebildet ist, den Modus zum Speichermodus umzuschalten und diesen Modus beizubehalten, wenn der Empfangsabschnitt einen Speichermodus-Einstellbefehl empfängt.

## Revendications

1. Système de charge sans contact (1, 3) com-prenant :
un module d'émission d'énergie (i) ayant une bobine d'émission d'énergie (2) pour émettre de l'énergie à haute fréquence ; et
un module de réception d'énergie (3) ayant une bobine de réception d'énergie (4) adaptée pour re-cevoir l'énergie à haute fréquence par induction électromagnétique et une batterie secondaire intégrée (13) chargée avec de l'énergie en courant continu obtenue en redressant l'énergie reçue, le module de réception d'énergie (3) incluant un circuit de protection (16) adapté pour empêcher une décharge excessive de la bat-terie secondaire (13),
dans lequel le module de réception d'énergie (3) inclut
une section de commande de commutation (12) adaptée pour exécuter une commutation entre un mode stockage où un trajet de courant de la batterie secondaire (13) vers toutes les portions de fourniture d'énergie incluant le circuit de protection (16) est coupé et un mode utilisation où la fourniture d'énergie à partir de la batterie secondaire (13) est permise,
une section sensible à la charge qui est adaptée pour délivrer en sortie un signal sensible à la charge lorsque le module de réception d'énergie (3) est chargé dans une position de réception d'énergie prédéterminée par rapport au module d'émission d'énergie (1), et
la section de commande de commutation (12) est réglée pour maintenir le mode stockage dans un état initial, et configurée pour basculer le mode vers le mode utilisation et maintenir le mode en réponse à une sortie du signal sensible à la charge, caractéri-sée en ce qu'il comprend une section de limitation de fonctionnement qui limite le fonctionnement de la sec-tion de commande de commutation (12) en fonction d'une durée de porteuse qui est une durée sur laquelle la porteuse de réception d'énergie de l'énergie à haute fréquence est présente dans la sortie de la bobine de réception d'énergie (4), dans lequel la section de li-mitation de fonctionnement exécute une commande pour permettre de basculer vers le mode utilisation par la section de commande de commutation lorsque la durée de porteuse dépasse une longueur fixe.

2. Système de charge sans contact selon la revendication 1, dans lequel la section sensible à la charge est configurée pour présenter une sortie sen-sible à la présence ou à l'absence d'une porteuse de réception d'énergie de l'énergie à haute fréquence dans une sortie de la bobine de réception d'énergie et délivre en sortie le signal sensible à la charge lors-que la porteuse de réception d'énergie est présente.

3. Système de charge sans contact selon la revendication 1 ou 2, dans lequel le module d'émission d'énergie inclut une section émettrice qui émet des données incluant une commande d'annulation,
le module de réception d'énergie inclut une section réceptrice qui reçoit des données émises à partir de la section émettrice du module d'émission d'énergie, et la section de commande de commutation exécute une commande de commutation vers le mode utilisation lorsque la durée de porteuse dépasse une longueur fixe ou lorsque la section réceptrice reçoit la commande d'annulation.

4. Système de charge sans contact selon la revendication 2, dans lequel le module d'émission d'énergie inclut une section émettrice qui émet des données incluant une commande d'annulation, et
le module de réception d'énergie inclut une section réceptrice qui reçoit des données émises à partir de la section émettrice du module d'émission d'énergie et une section de limitation de fonctionne-ment qui exécute une commande pour permettre de bascu-ler vers le mode utilisation par la section de com-mande de commutation lorsque la commande d'annulation est reçue.

5. Système de charge sans contact selon la revendication 1, dans lequel le module de réception d'énergie inclut un commutateur de proximité,
le module d'émission d'énergie inclut une section d'action de commutation placée de manière à commuter le commutateur de proximité lorsque le module de réception d'énergie est placé dans la position de réception d'énergie, et
la section sensible à la charge délivre en sortie le signal sensible à la charge en réponse à la commutation du commutateur de proximité par la section d'action de commutation.

6. Système de charge sans contact selon la revendication 5, dans lequel le module d'émission d'énergie inclut une section émettrice qui émet des données incluant une commande d'annulation, et
le module de réception d'énergie inclut une section réceptrice qui reçoit des données émises à partir de la section émettrice du module d'émission d'énergie et une section de limitation de fonctionne-ment qui exécute une commande pour permettre de bascu-ler vers le mode utilisation par la section de com-mande de commutation lorsque la commande d'annulation est reçue.

7. Système de charge sans contact selon l'une quelconque des revendications 3, 4 et 6, dans lequel la section de commande de commutation est configurée pour basculer le mode vers le mode stockage et mainte-nir le mode lorsque la section réceptrice reçoit une commande de réglage de mode stockage.
